(19) Europäisches Patentamt
European Patent Office
Office européen des brevets

(11) **EP 1 264 157 B1**

(12) **EUROPÄISCHE PATENTSCHRIFT**

| | |
|---|---|
| (45) Veröffentlichungstag und Bekanntmachung des Hinweises auf die Patenterteilung: **20.12.2006 Patentblatt 2006/51** | (51) Int Cl.: **G01B 5/00** (2006.01) **G01B 5/008** (2006.01) |
| (21) Anmeldenummer: **02750530.4** | (86) Internationale Anmeldenummer: **PCT/EP2002/002162** |
| (22) Anmeldetag: **28.02.2002** | (87) Internationale Veröffentlichungsnummer: **WO 2002/073123 (19.09.2002 Gazette 2002/38)** |

(54) **TASTKOPF MIT EINER TARIERUNG**

PROBE HEAD WITH TARING DEVICE

TETE PALPEUSE DOTEE D'UNE TARE

(84) Benannte Vertragsstaaten:
**DE FR GB IT**

(30) Priorität: **09.03.2001 DE 10111377**

(43) Veröffentlichungstag der Anmeldung:
**11.12.2002 Patentblatt 2002/50**

(73) Patentinhaber: **Carl Zeiss Industrielle Messtechnik GmbH**
**73447 Oberkochen (DE)**

(72) Erfinder:
• **WIEDMANN, Wolfgang**
**73434 Aalen (DE)**

• **RUCK, Otto**
**73479 Pfahlheim (DE)**
• **AUBELE, Eugen**
**89558 Böhmenkirch (DE)**

(74) Vertreter: **Henckell, Carsten**
**Carl Zeiss**
**Patentabteilung**
**73446 Oberkochen (DE)**

(56) Entgegenhaltungen:
**DE-B- 2 242 355      US-A- 4 882 848**

## Beschreibung

Die Erfindung betrifft einen Tastkopf mit einem gegenüber dem Tastkopf in wenigstens einer Meßrichtung beweglichen den Taststift tragenden Teil und einer zugeordneten Tarierung, die das bewegliche, den Taststift tragende Teil in wenigstens einer Meßrichtung in einer Sollage tarieren kann. Ein Tastkopf mit einer derartigen Tarierung ist bereits seit längerem bekannt und beispielsweise der Deutschen Auslegeschrift DE 22 42 355 beschrieben. Der hierin beschriebene Tastkopf weist einen Taststift auf, der gegenüber dem Tastkopf in den drei senkrecht aufeinander stehenden Koordinatenrichtungen ausgelenkt werden kann. Dazu ist das den Taststift tragende Teil über drei hintereinander angeordnete Blattfederparallelogramme mit dem feststehenden Teil des Tastkopfes verbunden, wobei jedes der drei Blattfederparallelogramme die Bewegung in einer der drei senkrecht aufeinander stehenden Meßrichtungen ermöglicht. Die Auslenkungen in den drei Koordinatenrichtungen werden über entsprechende Meßgeber erfaßt und zur Auswertung an das Koordinatenmeßgerät übertragen. Während das den Taststift tragende Teil in den beiden horizontalen Meßrichtungen praktisch kraftlos in seiner Ruhelage gehalten werden kann, ist in der dritten Meßrichtung, die vertikal ausgerichtet ist, eine Kraft erforderlich, die die Gewichtskraft des Taststiftes und der beweglichen Teile der Tastkopfmechnük kompensiert. Um dies zu realisieren, ist das bewegliche, den Taststift tragende Teil über eine Tarierung mit dem feststehenden Teil des Tastkopfes verbunden. Die Tarierung umfaßt hierbei eine Feder, deren eines Ende über einen Draht mit dem beweglichen, den Taststift tragenden Teil verbunden ist und deren anderes Ende an einer Halteplatte befestigt ist, wobei die Lage der Halteplatte in Richtung der vertikalen Meßrichtung über einen motorischen Antrieb verschoben werden kann. Zur Tarierung des Tastkopfes wird nunmehr, gesteuert durch einen entsprechenden elektronischen Tarierungsregler, die besagte Halteplatte über den motorischen Antrieb so lange verstellt, bis sich das den Taststift tragende Teil in der betreffenden Richtung in seiner Ruheposition befindet.

Einen anderen messenden Tastkopf mit einer Tarierung zeigt die Druckschrift US 4,882,848. Hierin ist für jede der Messrichtungen eine motorisch verstellbare Tarierung vorgesehen, um den Taststift unabhängig von der jeweiligen Ausrichtung des Tastkopfes in einer vordefinierten Nulllage tarieren zu können.

Derartige Tastköpfe mit einer Tarierung werden bereits seit längerem erfolgreich eingesetzt, wobei heute übliche Tastköpfe nicht nur eine Tarierung für die besagte vertikale Meßrichtung des Tastkopfes aufweisen, sondern ebenfalls für die beiden anderen Meßrichtungen. Eine derartige Tarierung in den anderen Meßrichtungen kann beispielsweise dann notwendig werden, wenn sich die Einbaulage des Tastkopfes ändert. Beispielsweise könnte der Tastkopf statt in vertikaler Richtung ebenfalls in horizontaler Richtung am Meßarm des Koordinatenmeßgerätes befestigt werden.

Da.es mittels des Tarierreglers praktisch unmöglich ist exakt die Sollage zu erreichen, wird üblicherweise um die Sollage herum ein sogenanntes Tarierfenster festgelegt, wobei die Tarierung den Tastkopf in der zu tarierenden Meßrichtung dann derart verstellt, daß die Meßwerte in der tarierten Sollage des Tastkopfes sich innerhalb dieses Tarierfensters bewegen.

Das beschriebene Tarieren eines messenden Tastkopfes hat in der Vergangenheit hervorragend funktioniert. Probleme ergaben sich allerdings dann, wenn der Tastkopf in der betreffenden zu tarierenden Meßrichtung schwingt. Ursache hierfür können beispielsweise Bodenschwingungen des Fundamentes sein, auf dem das Koordinatenmeßgerät aufgestellt ist oder Probleme in der Antriebsregelung der Mechanik zur Verstellung der Position des Tastkopfes. Dies führt dazu, daß beim Versuch das den Taststift tragende Teil über die Tarierung in der betreffenden Meßrichtung in die Solllage zu bewegen, das Signal des Meßwertgebers zur Messung der Auslenkung des den Taststift tragenden Teils in der betreffenden Meßrichtung das Tarierfenster laufend überschreitet. Hierdurch kommt es nach längerem erfolglosen Versuchen lediglich zu einer Fehlermeldung, daß der Tastkopf in der betreffenden Meßrichtung nicht tariert werden kann. Dies ist jedoch sehr unbefriedigend, weil insbesondere der Meßbetrieb erst dann weitergeführt werden kann, wenn das Problem durch einen Servicetechniker behoben ist.

Hiervon ausgehend liegt unserer Erfindung deshalb die Aufgabe zugrunde einen Tastkopf mit einer Tarierung, sowie ein zugehöriges Verfahren zur Tarierung eines Tastkopfes vorzuschlagen, mit dem in befriedigender Weise Fehler, die aufgrund von Schwingungen entstehen, behandelt werden können.

Die Aufgabe wird erfindungsgemäß dadurch gelöst, indem die Tarierung während des Tariervorganges nachfolgende Verfahrensschritte durchführt:

- Ermittlung der Amplitude von Schwingungen des den Taststift tragenden Teils in der zu tarierenden Meßrichtung

- Anpassen eines Tarierfensters, das die maximal zulässigen Abweichungen um die Sollage in der betreffenden Meßrichtung festlegt entsprechend der ermittelten Amplitude derart, dass nunmehr die maximale Amplitude des Messignals des Messwertgebers in der betreffenden zu tarierenden Messrichtung kleiner als das angepasste Tarierfenster ist

- Tarieren des den Taststift tragenden Teils derart, daß die Meßwerte des Meßgebers zur Messung der Auslenkung des den Taststift tragenden Teils in der betreffenden Meßrichtung das definierte Tarierfenster um die Sollage nicht überschreiten.

Die Erfindung umfasst ebenfalls einen Tastkopf nach Anspruch 1.

Der Grundgedanke unserer Erfindung ist hierbei darin zu sehen, daß die Amplitude von Schwingungen des den Taststift tragenden Teils in der zu tarierenden Meßrichtung ermittelt wird und das Tarierfenster entsprechend der ermittelten Amplitude derart angepaßt wird, daß nunmehr die maximale Amplitude des Meßsignals des Meßwertgebers in der betreffenden zu tarierenden Meßrichtung kleiner als das angepaßte Tarierfenster ist. Nunmehr kann über die Tarierung die Lage des den Taststift tragenden Teils derart eingestellt werden, daß das Signal der Meßwertgeber innerhalb des Tarierfensters liegt.

Durch diese Vorgehensweise ergibt sich nunmehr der besondere Vorteil, daß der Tastkopf auch trotz Schwingungen in der betreffenden Meßrichtung tariert werden kann. Des weiteren können hierdurch auch automatisiert störende Schwingungen ermittelt werden, die gegebenenfalls zu Problemen während des Meßablaufes führen können.

Die Ermittlung der Amplitude der betreffenden. Schwingungen kann auf Basis unterschiedlicher Signale erfolgen. Beispielsweise könnte mit einem entsprechenden am Koordinatenmeßgerät angebrachten Interferometer von außerhalb des Tastkopfes die Position des den Taststift tragenden Teils in der betreffenden zu tarierenden Meßrichtung überwacht werden. Besonders vorteilhaft lassen sich jedoch die Meßwerte der Meßwertgeber im Tastkopf verwenden, die die Auslenkung des den Taststift tragenden Teils gegenüber dem Tastkopf in der betreffenden zu tarierenden Meßrichtung messen.

Besonders einfach kann die Amplitude dann ermittelt werden, in dem das Verfahren der sogenannten Spitzenwertdetektion verwendet wird. Dieses Verfahren zeichnet hierbei die Meßwerte des Interferometers oder die Meßwerte der Meßwertgeber des Tastkopfes in der betreffenden zu tarierenden Meßrichtung über einen definierten Zeitraum auf und bestimmt hierbei den maximalen und den minimalen Wert des Signals. Selbstverständlich können auch alternative Verfahren eingesetzt werden. Beispielsweise läßt sich die maximale Amplitude auch näherungsweise über eine Sinusapproximation realisieren. Hierbei wird eine Sinusfunktion nach dem Gauss'schen Verfahren der kleinsten Fehlerquadrate in die Meßwerte eingepasst, wobei die Amplitude der eingepaßten Sinusfunktion dann als maximale Amplitude definiert wird. Desweiteren kann das Meßsignal auch über Fouriertransformation analysiert werden, wobei dann aus den Fourierkoeffizienten näherungsweise die maximale Amplitude ermittelt werden kann.

Als Solllage wird hierbei üblicherweise die Ruhelage in der betreffenden zu tarierenden Meßrichtung gewählt werden, die sich in der Mitte des Messbereiches befindet. Natürlich kann jedoch auch jede beliebige andere Lage gewählt werden.

Hinsichtlich der Anpassung des Tarierfensters bestehen gleichfalls mehrere unterschiedliche Möglichkeiten. In einer ersten Variante können ein oder mehrere Tarierfenster mit unterschiedlichem vordefinierten Abstand der Fenstergrenzen vorgegeben werden, wobei dann in Abhängigkeit von der ermittelten Amplitude eines der Fenster ausgewählt wird. Nachteilig hieran ist jedoch, daß eine Anpassung an die jeweils vorhandene Amplitude nur in gewissen Grenzen möglich ist. Erheblich vorteilhafter wird die Größe des Tarierfensters proportional zur Größe der bestimmten Amplitude angepaßt. Das Tarierfenster sollte in diesem Falle so gewählt werden, daß der Abstand zwischen den Fenstergrenzen etwas größer als die bestimmte maximale Amplitude gewählt wird. Hierdurch ist eine unproblematische Tarierung gewährleistet. In diesem letztgenannten Fall könnte prinzipiell das Tarierfenster für jede festgestellte Amplitude angepasst werden. Es empfiehlt sich jedoch ein Standard-Tarierfenster vorzusehen das nur dann durch eine Vergrößerung an die Amplitude angepasst wird, wenn die ermittelten Amplitude einen vordefinierten Schwellwert überschreitet.

Zusätzlich kann die Tarierung derart ausgebildet sein, daß beim Überschreiten der ermittelten Amplitude eines vordefinierten Maximalwertes der Tariervorgang komplett abgebrochen wird. Der Maximalwert sollte hierbei derart gewählt sein, daß ein sinnvolles Messen nicht mehr möglich ist.

Die Tarierung kann hierbei vorteilhaft so ausgebildet sein, daß sowohl beim Abbrechen der Tarierung aufgrund einer zu großen Amplitude wie auch beim Anpassen des Tarierfensters Fehlermeldungen erzeugt werden, die beispielsweise in einer Fehlerdatei abgespeichert werden und/oder auf dem Bildschirm des Koordinatenmeßgerätes angezeigt werden. Die Tarierung kann hierbei insbesondere derart ausgebildet sein, daß auch für unterschiedlich angepaßte Tarierfenster unterschiedliche Fehlermeldungen erzeugt werden. Beispielsweise könnte bei leicht vergrößerten Tarierfenstem eine Fehlermeldung auftreten, die den Bediener des Koordinatenmeßgerätes auf die Vergrößerung hinweist. Im Falle einer größeren Vergrößerung des Tarierfensters hingegen könnte eine Fehlermeldung ergehen, die den Bediener des Koordinatenmeßgerätes zusätzlich darauf hinweist, daß Taststifte mit dünnen Tasterschäften wegen der zu erwartenden Messfehler nicht mehr eingesetzt werden können.

Die Tarierung kann zusätzlich derart ausgebildet sein, daß diese neben der Amplitude zusätzliche Charakteristika der Schwingungen ermittelt und diese Charakteristika als Meldung ausgibt. Hierdurch kann ein Servicetechniker weitaus schneller die Ursache für die Schwingungen ermitteln und beseitigen.

Beispielsweise kann die Tarierung zusätzlich die Frequenzen der Schwingungen ermitteln, indem beispielsweise über Fourieranalyse das Meßsignal des Meßwertaufnehmers analysiert wird. Sehr niederfrequente Schwingungen weisen hierbei beispielsweise auf Bodenschwingungen hin. Zusätzlich kann die Tarierung auch geeignet sein Meßsignale von weiteren Sensoren auszuwerten, um hierdurch Schwingungen an anderen Stellen des Koordinatenmeßgerätes zu messen. Beispielsweise kann die Tarierung die Maßstabswerte zur Messung der Position des Tastkopfes in der betreffenden zu tarierenden Meßrichtung auf Schwingung untersuchen. Auch hierdurch können Rückschlüsse auf die Ursache der Schwingung gezogen werden. Handelt es sich beispielsweise um gleichförmige Schwingungen, die lediglich phasenverzögert zu den Schwingungen des den Taststift tragenden Teils erfolgen, so liegt die Ursache für die Schwingungen aller Voraussicht nach in einem defekten Antriebsregelkreis für den Antrieb der Mechanik zum Verstellen des Tastkopfes in der betreffenden Meßrichtung.

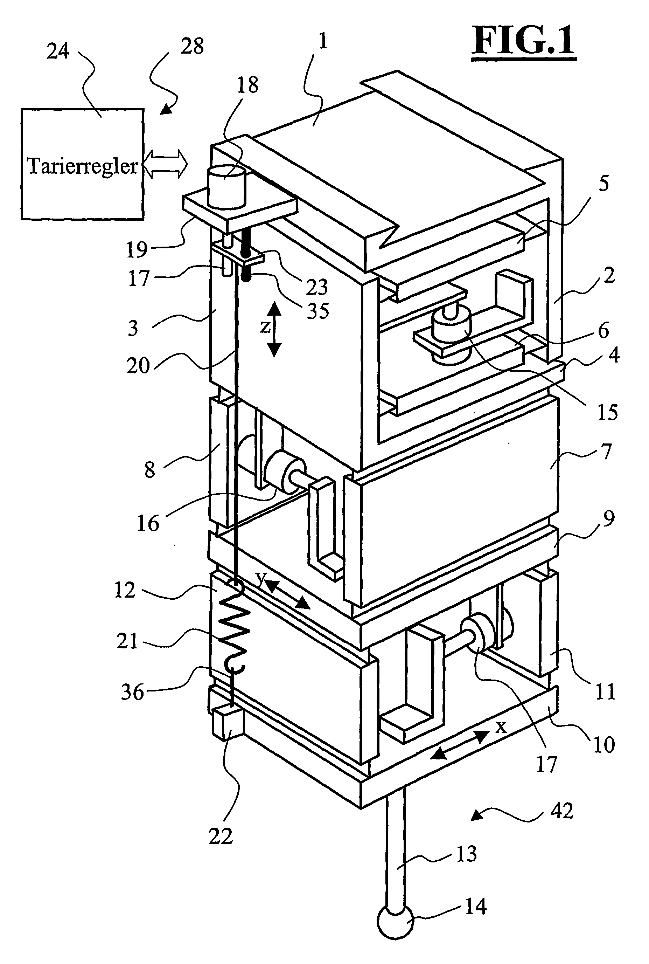

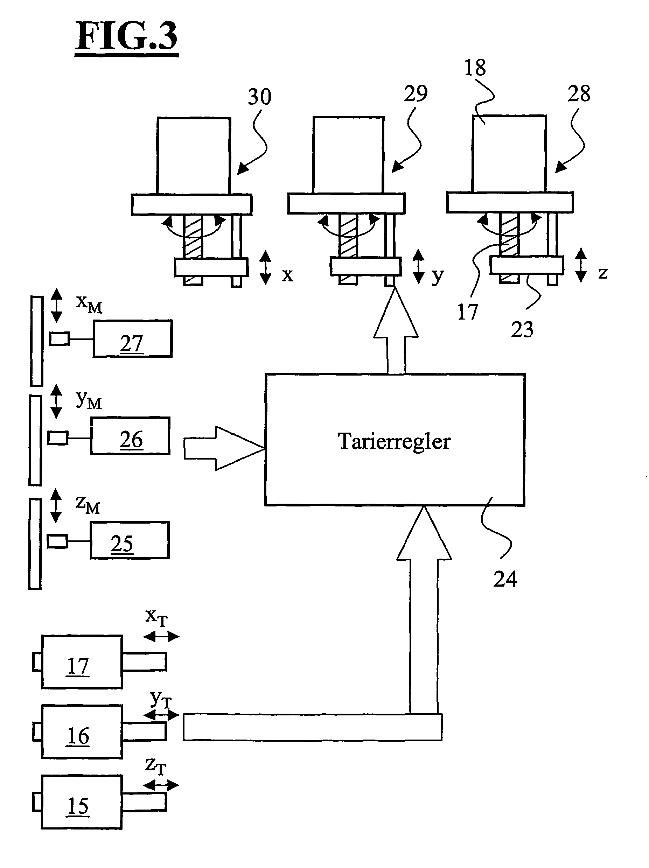

Der Tastkopf, in dem die Tarierung vorgesehen ist, kann hierbei vollkommen unterschiedlich ausgestaltet sein. Beispielsweise können die Führungen zum Bewegen des den Taststift tragenden Teils in der oder den Meßrichtungen als Federparallelogramm, als Gleitührung oder als Luftlagerfübrung ausgebildet sein. Auch die Tarierung kann vollkommen unterschiedlich aussehen. Anstelle des im Zusammenhang mit den Figuren 1 bis 3 gezeigten motorisch betriebenen Spindelantriebes könnte beispielsweise auch ein Schneckenantrieb vorhanden sein. Des weiteren kann auch der Tarierregler, der den Tariermotor betätigt, unterschiedlich ausgebildet sein. Beispielsweise kann dieser als Mikroprozessor im Tastkopfgehäuse vorgesehen sein. Genauso gut könnte dieser auch Bestandteil der Steuerung des Koordinatenmessgerätes sein.

Weitere Vorteile und Weiterbildungen der Erfindung ergeben sich im Zusammenhang mit der nachfolgenden Figurenbeschreibung. Hierin zeigen:

Figur 1: eine schematische Darstellung eines Tastkopfes mit einer erfindungsgemäßen Tarierung (28) in der perspektivischen Ansicht

Figur 2: ein Federparallelogramm (9, 10, 11, 12) des Tastkopfes gemäß Figur 1 in der Seitenansicht zur Bewegung des den Taststift tragenden Teils (10) in einer horizontalen Meßrichtung (x) mit einer Tarierung (30)

Figur 3: eine schematische Prinzipsskizze der Tarierung für die unterschiedlichen Meßrichtungen (x, y, z) des Tastkopfes gemäß Figur 1

Figur 4: Darstellung eines herkömmlichen Tariervorgangs mit einem Tastkopf gemäß Figur 1, dessen den Taststift tragendes Teil (10) in der Meßrichtung (z) der Tarierung schwingt.

Figur 5: schematische Darstellung der Ermittlung der Amplitude des Meßsignals ($z_T$) durch Spitzenwertdetektion

Figur 6: schematische Darstellung des Tariervorgangs mit einem vergrößerten Tarierfenster ($Z_{Amax}$, $Z_{Amin}$)

Figur 7: Darstellung der Auslenkungsmeßwerte ($z_T$) des den Taststift tragenden Teils (10) in der zu tarierenden Meßrichtung (z) und des von dem Maßstab (25) in der Meßrichtung (z) abgegebenen Signals ($z_M$)

Figur 8: schematische Darstellung einer Fourieranalyse des Meßwertssignals ($z_T$) zur Messung der Auslenkung des den Taststift tragenden Teils (10) in der Meßrichtung (z)

Der in Figur1 dargestellte Tastkopf besitzt ein gehäusefestes Teil in Form eines Winkels, dessen oberer waagerechter Schenkel (1) eine Aufnahmeschwalbe zur Befestigung des Tastkopfes an der Pinole des hier nicht näher dargestellten Koordinatenmeßgerätes aufweist. Mit dem vertikalen Schenkel (2) des gehäusefesten Teils ist über ein Paar in der Mitte verstärkter Federbleche (5) und (6) der vertikale Teil (3) eines L-förmigen Winkels verbunden. Die hieraus resultierende Parallelogrammführung bildet die z-Führung des Tastkopfes.

Am waagerechten Teil (4) des in (z) beweglichen Winkels ist über ein paar verstärkter Federbleche (7 und 8) eine Platte (9) beweglich aufgehängt, die die y-Führung des Tastkopfes bildet. An dieser wiederum hängt ein um 90° gegenüber den Federblechen (7 und 8) gedrehtes drittes paar Federbleche (11 und 12), das die Platte (9) mit einer weiteren Platte (10) verbindet, welche die x-Führung des Tastkopfes darstellt. Das hierdurch in den Meßrichtungen (x, y, z) nachgiebige Teil (10) des Tastkopfes trägt den Taststift (42), von dem hier der Tasterschaft (13) und die Tastkugel (14) zusehen ist. Jede der drei Parallelogrammführungen ist mit einem Meßkraftgenerator nach Art eines Tauchspulenantriebes versehen, der jedoch in der dargestellten Figur 1 nicht zu sehen ist und für die Erfindung auch nicht relevant ist. Dargestellt sind außerdem drei Meßsysteme (15, 16, 17) mit denen die Auslenkung der geführten Teile des Tastkopfes in den drei genannten Meßrichtungen (x, y, z) laufend ermittelt wird. Hierbei handelt es sich um sogenannte LVDT-Systeme das sind im wesentlichen bei einer Trägerfrequenz betriebene Induktionsspulen, die ein der Stellung des darin verschiebbaren Kerns proportionales Wegsignal abgeben.

Neben den eben beschriebenen Elementen weist der Tastkopf für jede der drei Meßrichtungen (x, y, z) eine eigene Tarierung auf, wobei von den drei Tarierungen hier der besseren Übersichtlichkeit halber nur die Tarierung (28) für die Meßrichtung (z) dargestellt ist. Wie bereits eingangs beschrieben, dient die jeweilige Tarierung dazu den Tastkopf in einer vordefinierten Sollage, die üblicherweise der Ruhelage entspricht, zu tarieren. Die Tarierung umfaßt hierbei eine Platte (19) an der ein Elektromotor (18) befestigt ist, der wiederum eine Gewindespindel (17) drehen kann. Die Gewindespindel (17) greift in ein entsprechendes Gewinde einer Platte (23) ein, die zusätzlich noch eine Bohrung aufweist, in die ein Stift (3 5) eingreift um die Platte (23) gegen Verdrehung zu sichern. Durch das Rotieren des Motors (18) kann mithin die Platte (23) nach Art eines Spindelantriebs angehoben oder abgesenkt werden.

Die Platte (23) ist mit dem den Taststift tragenden Teil (10) über den Faden (20), die Schraubenfeder (21) und den Faden (36) am Ausleger (22) des den Taststift tragenden Teils (10) befestigt: Durch anheben der Platte (23) wird auf das den Taststift tragende Teil (10) eine der Gewichtskraft der Mechanik und des Taststiftes entgegengesetzte Kraft erzeugt und zwar so lange, bis das Wegmeßsystem (15) in der betreffenden Meßrichtung (z) die Sollage erreicht hat. Zur entsprechenden Ansteuerung weist die Tarierung (28) zusätzlich einen Tarierregler (24) auf, der in Verbindung mit dem Wegmeßsystem (15) steht und in Abhängigkeit von dem hierdurch gelieferten Meßsignal den Elektromotor (18) geeignet bewegt.

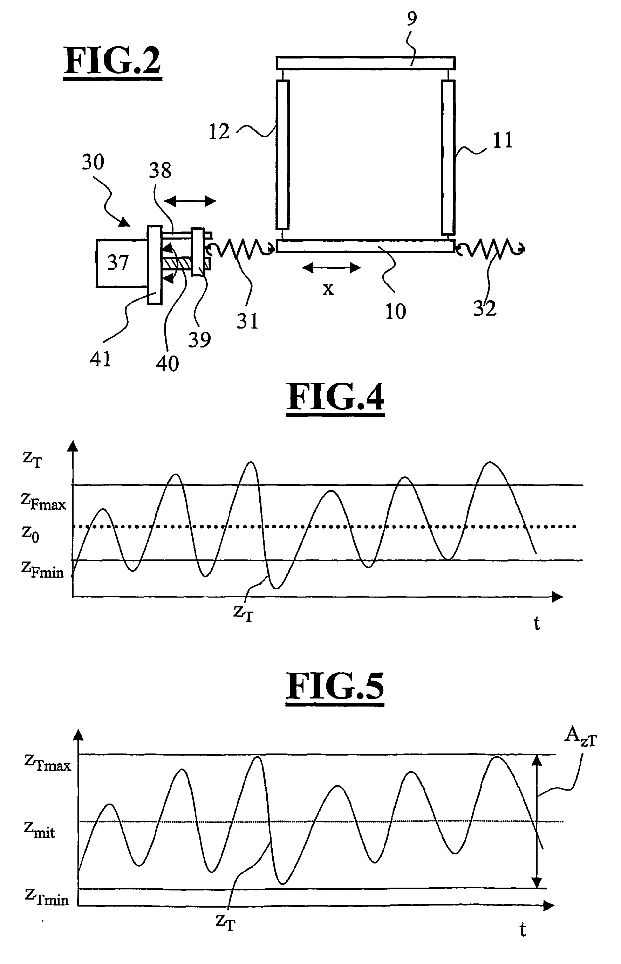

In analoger Weise funktionieren auch die Tarierungen (29 und 30) von denen für die Meßrichtung (x) beispielhaft und rein schematisch in Figur 2 das Prinzip erläutert wird.

Figur 2 zeigt hierbei eine rein schematische Darstellung der Federparallelogrammfuhrüng (9,10, 11,12) des Tastkopfes gemäß Figur 1, mit einer entsprechenden Tarierung (30). Die Tarierung (30) umfaßt hierbei in Analogie zur Tarierung (28) eine am Tastkopfgehäuse befestigte Platte (41), auf der ein Tariermotor (37) mit Gewindespindel (40) montiert ist. Durch drehen der Gewindespindel (40) kann eine Platte (39) in der mit (x) bezeichneten Meßrichtung verfahren werden, wobei die Platte über einen an der Platte (41) befestigten Stift (38) gegen Verdrehung gesichert ist. Die Platte (39) ist über eine Schraubenfeder (31) federnd mit dem den Taststift tragenden Teil (10) verbunden. Im Gegensatz zur Tarierung (28) gemäß Figur 1 umfaßt die Tarierung (30) an der gegenüberliegenden Seite des den Taststift tragenden Teils (10) eine weitere Schraubenfeder (32), die mit dem Gehäuse des Tastkopfes verbunden ist. Hierdurch wird erreicht, daß die Schraubenfeder (32) eine zur Kraft der Schraubenfeder (31) entgegengesetzte Gegenkraft aufbringt. Hierdurch kann das den Taststift tragende Teil (10) auch in horizontaler Meßrichtung (x) ohne Einfluß der Schwerkraft entsprechend tariert werden.

In vollkommener Analogie ist desweiteren in Richtung der dritten Meßrichtung (y) eine dritte Tarierung (29) vorgesehen, deren Wirkungsrichtung lotrecht zur Blattebene ist und die genauso aufgebaut ist, wie die in Figur 2 dargestellte Tarierung (30).

In Figur 3 wird nunmehr rein schematisch das Zusammenwirken von einzelnen Komponenten der Tarierung (28) für die Meßrichtung (z), der Tarierung (29) für die Meßrichtung (y) und der Tarierung (30) für die Meßrichtung (x) erläutert. Wie bereits oben ausgeführt, dient der Tarierregler (24) der Ansteuerung der Motoren für die drei Tarierungen (28,29,30), wobei die zum Linearantrieb notwendigen Motoren die Stellglieder sind. Als Eingangsgrößen liest der Tarierregler (24) hauptsächlich die Signale der Meßgeber (15,16, 17) zur Messung der Auslenkung des den Taststift tragenden Teils (10) in den drei Meßrichtungen (x, y, z). Die Tarierung in den drei Meßrichtungen (x,y,z) erfolgt dann derart, wie dies bereits oben beschrieben wurde, in dem von den drei Meßgebern (15,16,17) für die jeweilige Meßrichtung (x, y, z) die aktuelle Auslenkung des den Taststift tragenden Teils (10) an den Tarierregler (24) geliefert wird und jeder der Messwerte mit der zugehörigen Sollage in der betreffenden Meßrichtung verglichen wird. Der Tarierregler (24) steuert dann für jede Meßrichtung (x,y,z) den betreffenden Motor der zugehörigen Tarierung (28, 29, 30) derart an, dass das den Taststift tragende Teil (10) in Richtung der vorgegebenen Solllage verstellt wird. Der Tarierregler (24) fährt mit der Verstellung der betreffenden Tarierungen (28, 29, 3 0) solange fort, bis die von den Meßgebern (15,16,17) gelieferten Messwerte ($x_T$, $y_T$,$z_T$) ein um die Solllage in der betreffenden Meßrichtung (x, y, z) definiertes Tarierfenster nicht mehr überschreiten. Diese Überprüfung wird über einen längeren Zeitraum durchgeführt, um sicherzugehen, daß die Meßwerte ($x_T$,$y_T$,$z_T$) sicher innerhalb des vorgegebenen Tarierfensters liegen. Zusätzlich ist der Tarierregler (24) optional mit den Meßgebern (25,26, 27) verbunden, die die Maßstabswerte der Maßstäbe des Koordinatenmessgerätes zur Messung der Position des Tastkopfes in den drei Meßrichtungen (x,y,z) liefern. Der Grund hierfür wird noch weiter unten erläutert Die Maßstäbe sind üblicherweise entlang der Linearachsen der Mechanik des Koordinatenmessgerätes befestigt, über die der Tastkopf in den drei Koordinatenrichtungen (x,y,z) verfahren werden kann.

Die Tarierung für jede Meßrichtung erfolgt nun, wie bereits eingangs beschrieben, derart, daß für jede der drei Federparallelogrammführungen die zugeordnete Tarierung derart betrieben wird, daß sich die betreffende Federparallelogrammführung in der Sollage des Meßsystems befindet, wie dies rein beispielhaft für die Tarierung (28) in der Meßrichtung (z) in Figur 4 dargestellt ist. Ziel ist es hierbei die Tarierung (28) gemäß Figur derart einzustellen, daß die Meßwerte ($z_T$) in der Sollage ($Z_0$) des Meßsystems (15) zum liegen kommen. Da ein genaues abgleichen auf die Sollage ($z_0$) praktisch nicht möglich ist, ist üblicherweise ein Tarierfenster mit einem Minimalwert ($Z_{Fmin}$) und einem Maximalwert ($Z_{Fmax}$) vordefiniert, wobei bei einem Erreichen der Meßwerte ($z_T$) des Meßwertgebers (15) innerhalb dieses Tarierfensters ($Z_{Fmin}$, $Z_{Fmax}$) die Tarierung beendet wird. Schwingt das den Taststift tragende Teil (10) in der besagten Meßrichtung (z), wie dies in Figur 4 dargestellt ist, so überschreitet das Meßsignal ($z_T$) jedoch laufend das Tarierfenster ($Z_{Fmin}$, $Z_{Fmax}$) wie dies aus Figur 4 ebenfalls ersichtlich ist. Bei herkömmlichen Tarierungen würde dies zu einem Abbruch des Tariervorganges führen. Dies hat zur Folge, daß auch kein Meßablauf mehr durchgeführt werden kann. Erfindungsgemäß wird jedoch im Tarierregler (24) der Tarierung (28) nunmehr ermittelt, mit welcher Amplitude das den Taststift tragende Teil (10) in der betreffenden Meßrichtung (z) schwingt und dann gegebenenfalls das entsprechende Tarierfenster ($Z_{Fmin}$, $Z_{Fmax}$), das die maximalen Abweichungen um die Sollage ($z_0$) in der betreffenden Meßrichtung (z) festlegt, angepasst, d. h. hier also vergrößert

Die Bestimmung, mit welcher Amplitude das den Taststift tragende Teil. (10) schwingt und gegebenenfalls, welche Art von Schwingung vorliegt, erfolgt über eine Analyse, wie dies Figur 5 zeigt. In dieser Analyse wird lediglich das Meßsignal ($z_T$) des Meßwertgebers (15) zur Messung der Auslenkung in der Meßrichtung (z) über einen definierten Zeitraum (t) aufgezeichnet. Die maximale Amplitude ($A_{zT}$) der Schwingung des Meßsignals ($Z_T$) kann über eine Spitzenwertanalyse festgestellt werden, indem der Maximalwert des Meßsignals ($Z_{Tmax}$) und der Minimalwert des Meßsignals ($Z_{Tmin}$) ermittelt werden, wie Figur 5 dies darstellt. Der Abstand des festgestellten Maximalwertes ($Z_{Tmax}$) und des festgestellten Minimalwertes ($Z_{Tmin}$) gibt die maximale Amplitude ($A_{zT}$) des Meßsignals ($z_T$) an. Bei dem betreffenden aufgezeichneten Meßsignal ($z_T$) erfolgt zusätzlich eine Bestimmung, welche Frequenz die Schwingung näherungsweise aufweist, in dem die Nulldurchgänge des Meßsignals ($z_T$) ausgewertet werden. Nulldurchgang heißt hierbei, dass das Meßsignal ($z_T$) durch den Mittelwert ($z_{mit}$) zwischen dem festgestellten Maximalwert ($z_{Tmax}$) und dem festgestellten Minimalwert ($z_{Tmin}$) geht. Aus der Anzahl der Nulldurchgänge und dem Zeitraum (t), während dem das Meßsignal ($z_T$) aufgezeichnet wurde, kann die durchschnittliche Frequenz des Meßsignals ($z_T$) bestimmt werden.

Wie bereits oben ausgeführt kann die Frage, welche maximale Amplitude das Meßsignal aufweist und gegebenenfalls mit welcher durchschnittlichen Frequenz das Meßsignal schwingt, alternativ auch über andere Verfahren festgestellt werden. Beispielsweise lässt sich die Frage, ob und mit welcher Frequenz das Meßsignal schwingt auch relativ einfach über eine Fourieranalyse ermitteln. Die maximale Amplitude des Meßsignals ($z_T$) kann festgestellt werden, in dem nach dem Gauß'schen Verfahren der kleinsten Fehlerquadrate eine Sinusfunktion eingepasst wird und die Amplitude der eingepassten Sinusfunktion als Amplitude des Meßsignals ($z_T$) definiert wird.

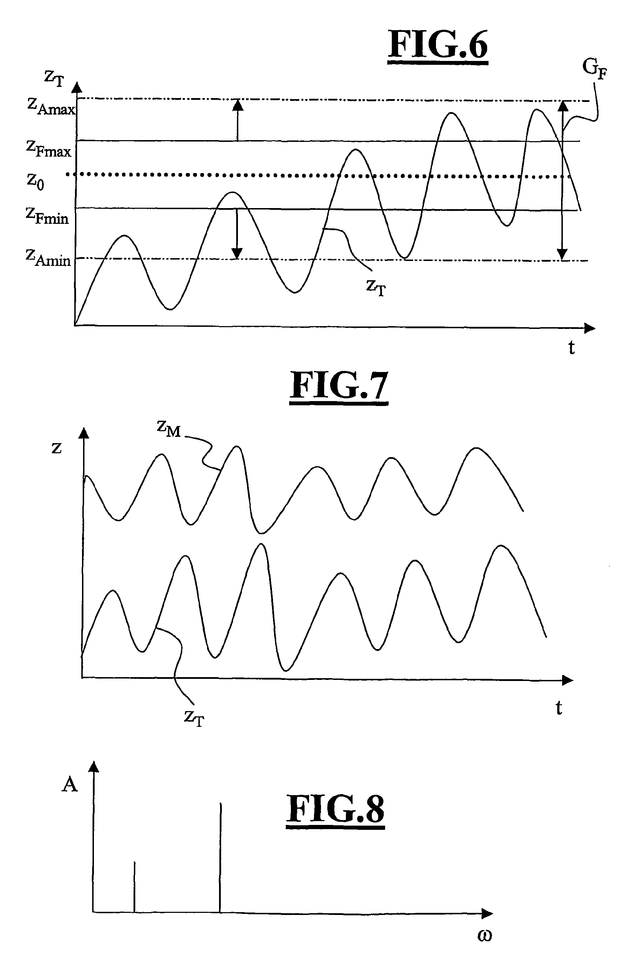

In einem nächsten Schritt wird nunmehr die Tarierung durchgeführt, wie Figur 6 dies schematisch darstellt. Wie aus Figur 6 zu sehen ist, wird auf Basis der ermittelten Amplitude ($A_{zT}$) das Tarierfenster ($Z_{Fmax}$ und $Z_{Fmin}$) auf eine neues Tarierfenster ($Z_{Amax}$ und $Z_{Amin}$) vergrößert, so daß nunmehr die maximale Amplitude des Meßsignals ($Z_T$) des Meßwertgebers (15) kleiner als das Tarierfenster ($Z_{Amax}$ und $Z_{Amin}$) ist. Die Größe ($G_F$) des angepassten Tarierfensters ($z_{Amax}$ und $Z_{Amin}$) kann einfach ermittelt werden über die Gleichung

$$\text{Gleichung 1:} \qquad G_F = A_{zT} + \varepsilon$$

wobei die Größe ($\varepsilon$) eine Konstante ist. In einem nächsten Schritt wird das den Taststift tragende Teil (10) über die Tarierung (28) nunmehr solange in Richtung der Sollage ($z_0$) gezogen; bis das durch den betreffenden Meßwertgeber (15) erzeugte Meßsignal ($z_T$) in der betreffenden Meßrichtung (z) das definierte Tarierfenster ($z_{Amax}$, $z_{Amin}$) um die Sollage ($z_0$) nicht mehr überschreitet. Zusätzlich wird von der Tarierung (28) eine Fehlermeldung erzeugt, die auf den Bildschirm des Koordinatenmeßgerätes an den Bediener ausgegeben wird und diesen darüber informiert, daß der Tastkopf in der betreffenden Meßrichtung trotz Schwingungen tariert wurde. Darüber hinaus wird der Bediener aufgefordert den Service zu verständigen. Der betreffende Text kann in Abhängigkeit von der gemessenen Amplitude variieren. Bei geringer Amplitude reicht möglicherweise der Hinweis auf Schwingungen. Bei größeren Amplituden hingegen sollte der Bediener darauf hingewiesen werden, daß mit einem entsprechend tarierten Tastkopf nur noch stärkere Taststifte verwendet werden dürfen, da die Schwingungen bei dünnen Taststiften aufgrund der in der betreffenden Meßrichtung aufgeschalteten Meßkraft zu erheblichen Durchbiegungen des Taststiftes und mithin zu Meßfehlern führen können.

Übersteigt die gemessene Amplitude ($A_{zT}$) hingegen einen vordefinierten Maximalwert, so sollte der Tariervorgang völlig abgebrochen werden, da in diesem Falle eine Messung mit einem entsprechend tarierten Tastkopf nicht mehr sinnvoll durchgeführt werden kann. Die Tarierung sollte auch für diesen Fall eine entsprechende Fehlermeldung an den Benutzer des Koordinatenmeßgerätes ausgeben.

Neben dem oben beschriebenen Verfahren kann die Tarierung in einer besonders vorteilhaften Weiterbildung neben der Amplitude des den Taststift tragenden Teils (10) zusätzliche Charakteristika der Schwingung ermitteln und diese Charakteristika als Meldung ausgeben. Beispielsweise kann die Tarierung Meßsignale von weiteren Sensoren, wie beispielsweise den Maßstabswerten zur Messung der Position des Tastkopfes in der betreffenden Meßrichtung, auswerten, um hierdurch Schwingungen an anderen Stellen des Koordinatenmeßgerätes zu messen, wie dies bereits oben im Zusammenhang mit Figur 3 gezeigt wurde. Für den oben betrachteten Fall der Tarierung in z-Richtung zeigt Figur 7 ein entsprechendes Diagramm. Unten ist hierbei das Signal ($z_T$) des Meßgebers (15) zur Messung der Auslenkung des den Taststift tragenden Teils (10) in der Meßrichtung (z) aufgezeichnet. Darüber ist das Signal des zugehörigen Maßstabes an der Mechanik des Koordinatenmeßgerätes ($z_M$) dargestellt. Aus den Meßsignalverläufen läßt sich nunmehr beispielsweise durch den Servicetechniker feststellen, daß der Tastkopf selber schwingt und das betreffende Maßstabsignal gegenüber dem Signal des Meßwertgebers (15) im Tastkopf phasenverschoben ist. Hieraus kann der Servicetechniker beispielsweise die Information entnehmen, daß die gesamte Mechanik schwingt und die Ursache für die Schwingung nicht im Tastkopf (z. B. bei den Messkraftgeneratoren) zu suchen ist. Darüber hinaus können, wie Figur 8 dies zeigt, zusätzlich auch die Frequenzen der Schwingungen ermittelt werden. Dies kann beispielsweise über Fourrieranalyse oder durch zählen der Nulldurchgänge des Signals festgestellt werden. Wenn niedrige Frequenzanteile vorliegen, so ist dies ein Indiz für Bodenschwingungen. Bei höheren Frequenzen ist die Ursache möglicherweise im Positionsregelkeis der Mechanik zur Bewegung des Tastkopfes in der betreffenden Meßrichtung zu suchen.

Wie bereits oben ausgeführt, handelt es sich bei dem im Zusammenhang mit den Figuren 1 bis 8 gezeigten Ausführungsbeispiel der Erfindung lediglich um ein Beispiel, dass in vielfältiger Weise variiert werden kann. Beispielsweise muss der in Figur 1 gezeigte Tastkopf nicht zwangsläufig so ausgebildet sein, dass das den Taststift tragende Teil in allen drei senkrecht aufeinander stehenden Meßrichtungen (x,y,z) beweglich geführt ist Für eindimensionale Meßaufgaben könnte genauso gut ein Tastkopf mit nur einer Meßrichtung verwendet werden. Des weiteren muss auch nicht zwangsläufig für jede Meßrichtung (x,y,z) eine eigene Tarierung vorgesehen seien. Beispielsweise könnte, wie in Figur 1 gezeigt, nur für die vertikale Meßrichtung (z) eine Tarierung vorgesehen werden.

**Patentansprüche**

1. Tastkopf mit einem in wenigstens einer Meßrichtung beweglichen, einen Taststift (42) tragenden Teil (10) und einer zugeordneten Tarierung (24, 28, 29, 30), die das bewegliche, den Taststift tragende Teil (10) in wenigstens einer Meßrichtung (x,y,z) in einer Sollage ($x_0$, $y_0$, $z_0$) tarieren kann, **dadurch gekennzeichnet, dass** die Tarierung (24, 28, 29, 30) mit einem Tarierregler (24) vorgesehen ist, der zur Durchführung folgender Verfahrensschritte während eines Tariervorganges konfiguriert ist:

   - Ermittlung der Amplitude ($A_{zT}$) von Schwingungen des den Taststift tragenden Teils (10) in der zu tarierenden Meßrichtung (z)
   - Anpassen eines Tarierfensters ($z_{Amax}$, $z_{Amin}$), das die maximal zulässigen Abweichungen um die Sollage ($z_0$) in der betreffenden Meßrichtung (z) festlegt entsprechend der ermittelten Amplitude ($A_{zT}$) derart, daß nunmehr die maximale Amplitude des Meßsignals des Meßwertgebers in der betreffenden zu tarierenden Meßrichtung kleiner als das angepaßte Tarierfenster ist
   - Tarieren des den Taststift tragenden Teiles (10) derart, daß die Meßwerte ($z_T$) des Meßgebers (15) zur Messung der Auslenkung des den Taststift tragenden Teils (10) in der betreffenden Meßrichtung (z) das definierte Tarierfenster ($z_{Amax}$, $z_{Amin}$) um die Sollage ($z_0$) nicht überschreiten.

2. Tastkopf nach Anspruch 1, **dadurch gekennzeich-** net, **daß** die Tarierrung (24,28, 29,30) derart ausgebildet ist, daß der Tariervorgang abgebrochen wird, wenn die Amplitude ($A_{zT}$) der Schwingungen einen definierten Maximalwert überschreitet.

3. Tastkopf nach Anspruch 1 oder 2, **dadurch gekennzeichnet, daß** die Tarierung (24,28, 29, 30) derart ausgebildet ist, daß die Amplitude aus den Meßwerten ($z_T$) des Meßwertgebers (15) abgeleitet wird, der die Auslenkung des den Taststift tragenden Teils (10) gegenüber dem Tastkopf in der betreffenden Meßrichtung (z) mißt

4. Tastkopf nach einem der Ansprüche 1-3, **dadurch gekennzeichnet, daß** die Tarierung die Amplitude durch Spitzenwertdetektion aus den Meßwerten ($z_T$) ermittelt.

5. Tastkopf nach einem der Ansprüche 1 bis 4, **dadurch gekennzeichnet, daß** die Tarierung beim vergrößern des Tarierfensters ($Z_{Fmax}$, $z_{Fmin}$) eine Fehlermeldung ausgibt.

6. Tastkopf nach einem der vorhergehenden Ansprache, **dadurch gekennzeichnet, daß** die Tarierung derart ausgebildet ist, daß wenigstens zwei unterschiedliche Tarierfenster ($z_{Fmax}$, $z_{Fmin}$ und $z_{Amax}$, $z_{Amin}$) möglich sind, und die Tarierung in Abhängigkeit von der ermittelten Amplitude eines der Tarierfenster auswählt.

7. Tastkopf nach einem der vorhergehenden Ansprüche, **dadurch gekennzeichnet, daß** die Tarierung derart ausgebildet ist, daß diese für wenigstens zwei mögliche unterschiedliche vergrößerte Tarierfenster eine eigene Fehlermeldung ausgibt.

8. Tastkopf nach einem der Ansprüche 1 bis 7, **dadurch gekennzeichnet, daß** die Tarierung neben der Amplitude zusätzlich Charakteristika der Schwingungen ermittelt und diese Charakteristika als Meldung ausgibt.

9. Tastkopf nach Anspruch 8, **dadurch gekennzeichnet, daß** die Tarierung die Frequenzen der Schwingungen ermittelt.

10. Tastkopf nach Anspruch 9, **dadurch gekennzeichnet, daß** die Tarierung die Frequenzen über Fourieranalyse ermittelt.

11. Tastkopf nach Anspruch 8, **dadurch gekennzeichnet, daß** die Tarierung geeignet ist Meßsignale von weiteren Sensoren (26,26, 27) auszuwerten, um hierdurch Schwingungen an anderen Stellen des Koordinatenmeßgerätes zu messen.

12. Tastkopf nach Anspruch 11, **dadurch gekenn-**

zeichnet, daß die Tarierung die Maßstabsmeßwerte ($z_M$) zur Messung der Position des Tastkopfes in der betreffenden Meßrichtung (z) auf Schwingungen untersucht.

13. Tastkopf nach einem der Ansprüche 1 bis 12, **dadurch gekennzeichnet, daß** die Tarierung den Abstand ($G_F$) der Begrenzungen des Tarierfensters ($Z_{Amax}$, $Z_{Amin}$) proportional zur gemessenen Amplitude ($A_{zT}$) der Tastkopfschwingungen in der betreffenden Meßrichtung (z) ermittelt.

14. Tastkopf nach einem der Ansprüche 1 bis 13, **dadurch gekennzeichnet, daß** die Tarierung beim Vorhandensein von Schwingungen eine Fehlermeldung ausgibt.

15. Tastkopf nach einem der vorhergehenden Ansprüche, **dadurch gekennzeichnet, daß** die Tarierung ein Stellglied (18) zur Verstellung der Ruhelage des den Taststift tragenden Teils und einen dem Stellglied zugeordneten Tarierregler (24), der der Ansteuerung des Stellgliedes dient, umfasst.

16. Verfahren zur Tarierung des beweglichen, den Taststift (42) tragenden Teils (10) eines messenden Tastkopfes für ein Koordinatenmeßgerät in einer Sollage ($z_0$) für wenigstens eine Meßrichtung (z) **gekennzeichnet durch** folgende Verfahrensschritte:

   - Ermittlung der Amplitude ($A_{zT}$) von Schwingungen des den Taststift tragenden Teils (10) in der zu tarierenden Meßrichtung (z)
   - Anpassen eines vordefinierten Tarierfensters ($z_{Amax}$, $z_{Amin}$), das die maximalen Abweichungen um die Sollage ($z_0$) in der betreffenden Meßrichtung (z) festlegt entsprechend der ermittelten Amplitude ($A_{zT}$) derart, daß nunmehr die maximale Amplitude des Meßsignals des Meßwertgebers in der betreffenden zu tarierenden Meßrichtung kleiner als das angepaßte Tarierfenster ist
   - tarieren des den Taststift tragenden Teiles (10) derart, daß die Meßwerte ($z_T$) des Meßgebers zur Messung der Auslenkung des den Taststift tragenden Teils (10) in der betreffenden Meßrichtung (z) das definierte Tarierfenster ($Z_{Amax}$, $Z_{Amin}$) um die Sollage ($z_0$) nicht überschreiten.

17. Verfahren nach Anspruch 16, **dadurch gekennzeichnet, daß** der Tariervorgang abgebrochen wird, wenn die Amplitude ($A_{zT}$) der Schwingungen einen definierten Maximalwert überschreiten.

18. Verfahren nach Anspruch 16 oder 17, **dadurch gekennzeichnet, daß** die Amplitude aus den Meßwerten (zr) des Meßwertgebers (15) abgeleitet wird, der die Auslenkung des den Taststift tragenden Teils (10) gegenüber dem Tastkopf in der betreffenden Meßrichtung (z) mißt.

19. Verfahren nach Anspruch 18, **dadurch gekennzeichnet, daß** die Amplitude durch Spitzenwertdetektion aus den Meßwerten ($z_T$) ermittelt wird.

20. Verfahren nach einem der Ansprüche 16 bis 19, **dadurch gekennzeichnet, daß** beim Vergrößern des Tarierfensters eine Fehlermeldung ausgegeben wird.

21. Verfahren nach einem der Ansprüche 16-20, **dadurch gekennzeichnet, daß** wenigstens zwei unterschiedliche vergrößerte Tarierfenster ($Z_{Fmax}$, $Z_{Fmin}$ und $Z_{Amax}$, $Z_{Amin}$) möglich sind, und in Abhängigkeit von der ermittelten Amplitude ($A_{zT}$) eines der Tarierfenster ausgewählt wird.

22. Verfahren nach einem der Ansprüche 16.-21, **dadurch gekennzeichnet, daß** wenigstens zwei möglichen unterschiedlichen vergrößerten Tarierfenstern eine eigene Fehlermeldung zugeordnet ist.

23. Verfahren nach einem der Ansprüche 16 bis 22, **dadurch gekennzeichnet, daß** neben der Amplitude zusätzlich Charakteristika der Schwingungen ermittelt werden.

24. Verfahren nach Anspruch 23, **dadurch gekennzeichnet, daß** die Frequenzen der Schwingungen ermittelt werden.

25. Verfahren nach Anspruch 24, **dadurch gekennzeichnet, daß** die Frequenzen über Fourrieranalyse ermittelt werden.

26. Verfahren nach Anspruch 23, **dadurch gekennzeichnet, daß** Schwingungen an anderen Stellen des Koordinatenmeßgerätes gemessen werden.

27. Verfahren nach Anspruch 26, **dadurch gekennzeichnet, daß** zusätzlich die Maßstabsmeßwerte ($z_M$) zur Messung der Position des Tastkopfes in der betreffenden Meßrichtung (z) auf Schwingungen untersucht werden.

28. Verfahren nach einem der Ansprüche 16 bis 27, **dadurch gekennzeichnet, daß** der Abstand der Begrenzungen ($G_F$) des Tarierfensters ($z_{Amax}$, $z_{Amin}$) proportional zur gemessenen Amplitude ($A_{zT}$) der Tastkopfschwi.ngungen in der betreffenden Meßrichtung ermittelt wird.

## Claims

1. Probe head having a part (10) which can move in at least one measurement direction and is fitted with a feeler (42), and an associated taring means (24, 28, 29, 30) which can tare the moving part (10), which is fitted with the feeler, in at least one measurement direction (x, y, z) to a setpoint position ($x_0$, $y_0$, $z_0$), **characterized in that** the taring means (24, 28, 29, 30) is provided with a taring controller (24) which is designed to carry out the following method steps during a taring process:

   - determining the amplitude ($A_{zT}$) of oscillations of the part (10), which is fitted with the feeler, in the measurement direction (z) to be tared,
   - adapting a taring window ($z_{Amax}$, $z_{Amin}$), which defines the maximum permissible deviations around the setpoint position ($z_0$) in the relevant measurement direction (z), in accordance with the determined amplitude ($A_{zT}$) in such a way that the maximum amplitude of the measurement signal from the measured-value sensor in the relevant measurement direction to be tared is now smaller than the adapted taring window,
   - taring the part (10), which is fitted with the feeler, in such a way that the measured values ($z_T$) of the sensor (15) for measuring the deflection of the part (10), which is fitted with the feeler, in the relevant measurement direction (z) does not exceed the defined taring window ($Z_{Amax}$, $Z_{Amin}$) around the setpoint position ($z_0$).

2. Probe head according to Claim 1, **characterized in that** the taring means (24, 28, 30) is formed in such a way that the taring process is interrupted when the amplitude ($A_{zT}$) of the oscillations exceeds a defined maximum value.

3. Probe head according to Claim 1 or 2, **characterized in that** the taring means (24, 28, 29, 30) is formed in such a way that the amplitude is derived from the measured values ($z_T$) from the measured-value sensor (15) which measures the deflection of the part (10), which is fitted with the feeler, in relation to the probe head in the relevant measurement direction (z).

4. Probe head according to one of Claims 1-3, **characterized in that** the taring means determines the amplitude by detecting peak values from the measured values ($z_T$).

5. Probe head according to one of Claims 1 to 4, **characterized in that** the taring means outputs a fault message when the taring window ($Z_{Fmax}$, $Z_{Fmin}$) increases in size.

6. Probe head according to one of the preceding claims, **characterized in that** the taring means is formed in such a way that at least two different taring windows ($Z_{Fmax}$, $Z_{Fmin}$ and $Z_{Amax}$, $Z_{Amin}$) are possible, and the taring means selects one of the taring windows as a function of the determined amplitude.

7. Probe head according to one of the preceding claims, **characterized in that** the taring means is formed in such a way that it outputs a dedicated fault message for at least two possible, different taring windows which are increased in size.

8. Probe head according to one of Claims 1 to 7, **characterized in that** the taring means additionally determines characteristics of the oscillations as well as the amplitude, and outputs these characteristics as messages.

9. Probe head according to Claim 8, **characterized in that** the taring means determines the frequencies of the oscillations.

10. Probe head according to Claim 9, **characterized in that** the taring means determines the frequencies by means of Fourier analysis.

11. Probe head according to Claim 8, **characterized in that** the taring means is suitable for evaluating measurement signals from further sensors (25, 26, 27) in order to thus measure oscillations at other points of the coordinate measurement device.

12. Probe head according to Claim 11, **characterized in that** the taring means examines the scale measured values ($Z_M$) for measuring the position of the probe head in the relevant measurement direction (z) for oscillations.

13. Probe head according to one of Claims 1 to 12, **characterized in that** the taring means determines the distance ($G_F$) between the boundaries of the taring window ($z_{Amax}$, $z_{Amin}$) proportionally to the measured amplitude ($A_{zT}$) of the probe-head oscillations in the relevant measurement direction (z).

14. Probe head according to one of Claims 1 to 13, **characterized in that** the taring means outputs a fault message when oscillations are present.

15. Probe head according to one of the preceding claims, **characterized in that** the taring means comprises an actuator (18) for adjusting the quiescent position of the part which is fitted with the feeler, and a taring controller (24) which is associated with the actuator and serves to control the actuator.

16. Method for taring the moving part (10), which is fitted with the feeler (42), of a measuring probe head for a coordinate measurement device to a setpoint position ($Z_0$) for at least one measurement direction (z), **characterized by** the following method steps:

- determining the amplitude ($A_{zT}$) of oscillations of the part (10), which is fitted with the feeler, in the measurement direction (z) to be tared,
- adapting a predefined taring window ($Z_{Amax}$, $Z_{Amin}$), which defines the maximum deviations around the setpoint position ($z_0$) in the relevant measurement direction (z) in accordance with the determined amplitude ($A_{zT}$) in such a way that the maximum amplitude of the measurement signal from the measured-value sensor in the relevant measurement direction to be tared is now smaller than the adapted taring window,
- taring the part (10), which is fitted with the feeler, in such a way that the measured values ($z_T$) of the sensor for measuring the deflection of the part (10), which is fitted with the feeler, in the relevant measurement direction (z) does not exceed the defined taring window ($Z_{Amax}$, $Z_{Amin}$) around the setpoint position ($z_0$).

17. Method according to Claim 16, **characterized in that** the taring process is interrupted when the amplitude ($A_{zT}$) of the oscillations exceeds a defined maximum value.

18. Method according to Claim 16 or 17, **characterized in that** the amplitude is derived from the measured values ($z_T$) from the measured-value sensor (15) which measures the deflection of the part (10), which is fitted with the feeler, in relation to the probe head in the relevant measurement direction (z).

19. Method according to Claim 18, **characterized in that** the amplitude is determined by detecting peak values from the measured values ($z_T$).

20. Method according to one of Claims 16 to 19, **characterized in that** a fault message is output when the taring window increases in size.

21. Method according to one of Claims 16-20, **characterized in that** at least two different taring windows ($Z_{Fmax}$, $Z_{Fmin}$ and $Z_{Amax}$, $Z_{Amin}$) which are increased in size are possible, and one of the taring windows is selected as a function of the determined amplitude ($A_{zT}$).

22. Method according to one of Claims 16-21, **characterized in that** a dedicated fault message is associated with at least two possible, different taring windows which are increased in size.

23. Method according to one of Claims 16 to 22, **characterized in that**, as well as the amplitude, characteristics of the oscillations are additionally determined.

24. Method according to Claim 23, **characterized in that** the frequencies of the oscillations are determined.

25. Method according to Claim 24, **characterized in that** the frequencies are determined by means of Fourier analysis.

26. Method according to Claim 23, **characterized in that** oscillations at other points of the coordinate measurement device are measured.

27. Method according to Claim 26, **characterized in that** the scale measured values ($z_M$) for measuring the position of the probe head in the relevant measurement direction (z) are additionally examined for oscillations.

28. Method according to one of Claims 16 to 27, **characterized in that** the distance between the boundaries ($G_F$) of the taring window ($z_{Amax}$, $z_{Amin}$) is determined proportionally to the measured amplitude ($A_{zT}$) of the probe-head oscillations in the relevant measurement direction.

## Revendications

1. Tête de palpage comprenant une pièce (10) mobile dans au moins une direction de mesure et supportant une broche de palpage (42) ainsi qu'une tare associée (24, 28, 29, 30) qui peut tarer la pièce (10) mobile supportant la broche de palpage dans une position de consigne ($x_0$, $y_0$, $z_0$) dans au moins une direction de mesure (x, y, z), **caractérisée en ce que** la tare (24, 28, 29, 30) est prévue avec un régulateur de tare (24) qui est configuré pour exécuter les étapes suivantes pendant une opération de tarage :

- détermination de l'amplitude ($A_{zT}$) des oscillations de la pièce (10) supportant la broche de palpage dans la direction de mesure à tarer (z),
- adaptation d'une fourchette de tarage ($Z_{Amax}$, $Z_{Amin}$) qui détermine les écarts maximums autorisés autour de la position de consigne ($z_0$) dans la direction de mesure (z) concernée en fonction de l'amplitude ($A_{zT}$) déterminée de telle sorte que l'amplitude maximale du signal de mesure du codeur de valeur mesurée dans la direction de mesure concernée à tarer est à présent inférieure à la fourchette de tarage adaptée,
- tarage de la pièce (10) supportant la broche de palpage de telle sorte que les valeurs mesurées ($z_T$) du codeur de mesure (15) destiné à mesurer la déviation de la pièce (10) supportant la broche de palpage dans la direction de mesure concernée (z) ne dépassent pas la fourchette de tarage ($Z_{Amax}$, $Z_{Amin}$) définie autour de la position de consigne ($z_0$).

**2.** Tête de palpage selon la revendication 1, **caractérisée en ce que** la tare (24, 28, 29, 30) est configurée de telle sorte que l'opération de tarage est interrompue lorsque l'amplitude ($A_{zT}$) des oscillations dépasse une valeur maximale définie.

**3.** Tête de palpage selon la revendication 1 ou 2, **caractérisée en ce que** la tare (24, 28, 29, 30) est configurée de telle sorte que l'amplitude est déduite des valeurs mesurées ($z_T$) du codeur de valeur mesurée (15) qui mesure la déviation de la pièce (10) supportant la broche de palpage par rapport à la tête de palpage dans la direction de mesure concernée (z).

**4.** Tête de palpage selon l'une des revendications 1 à 3, **caractérisée en ce que** la tare détermine l'amplitude par détection des valeurs de crête des valeurs mesurées ($z_T$).

**5.** Tête de palpage selon l'une des revendications 1 à 4, **caractérisée en ce que** la tare délivre un message d'erreur en cas d'agrandissement de la fourchette de tarage ($Z_{Fmax}$, $Z_{Fmin}$).

**6.** Tête de palpage selon l'une des revendications précédentes, **caractérisée en ce que** la tare est configurée de telle sorte qu'au moins deux fourchettes de tarage ($Z_{Fmax}$, $Z_{Fmin}$ et $Z_{Amax}$, $Z_{Amin}$) différentes sont possibles et la tare sélectionne l'une des fourchettes de tarage en fonction de l'amplitude déterminée.

**7.** Tête de palpage selon l'une des revendications précédentes, **caractérisée en ce que** la tare est configurée de telle sorte qu'elle délivre un message d'erreur propre pour au moins deux fourchettes de tarage possibles de tailles différentes.

**8.** Tête de palpage selon l'une des revendications 1 à 7, **caractérisée en ce que** la tare, outre l'amplitude, détermine des caractéristiques supplémentaires des oscillations et délivre des caractéristiques sous la forme d'un message.

**9.** Tête de palpage selon la revendication 8, **caractérisée en ce que** la tare détermine les fréquences des oscillations.

**10.** Tête de palpage selon la revendication 9, **caractérisée en ce que** la tare détermine les fréquences par une analyse de Fourier.

**11.** Tête de palpage selon la revendication 8, **caractérisée en ce que** la tare est conçue pour interpréter les signaux de mesure de capteurs supplémentaires (25, 26, 27) afin de mesurer ainsi les oscillations en d'autres endroits de l'appareil de mesure de coordonnées.

**12.** Tête de palpage selon la revendication 11, **caractérisée en ce que** la tare analyse les valeurs mesurées à l'échelle ($z_M$) destinées à mesurer la position de la tête de palpage dans la direction de mesure concernée (z) pour y déceler d'éventuelles oscillations.

**13.** Tête de palpage selon l'une des revendications 1 à 12, **caractérisée en ce que** la tare détermine l'écart ($G_F$) entre les limites de la fourchette de tarage ($Z_{Amax}$, $z_{Amin}$) proportionnellement à l'amplitude mesurée ($A_{zT}$) des oscillations de la tête de palpage dans la direction de mesure concernée (z).

**14.** Tête de palpage selon l'une des revendications 1 à 13, **caractérisée en ce que** la tare délivre un message d'erreur en présence d'oscillations.

**15.** Tête de palpage selon l'une des revendications précédentes, **caractérisée en ce que** la tare comprend un élément de réglage (18) pour régler la position de la pièce supportant la broche de palpage et un régulateur de tare (24) associé à l'élément de réglage et qui sert à la commande de l'élément de réglage.

**16.** Procédé pour tarer la pièce (10) mobile supportant la broche de palpage (42) d'une tête de palpage de mesure pour un appareil de mesure de coordonnées dans une position de consigne ($z_0$) pour au moins une direction de mesure (z), **caractérisée par** les étapes suivantes :

- détermination de l'amplitude ($A_{zT}$) des oscillations de la pièce (10) supportant la broche de palpage dans la direction de mesure à tarer (z),
- adaptation d'une fourchette de tarage ($Z_{Amax}$, $Z_{Amin}$) qui détermine les écarts maximums autorisés autour de la position de consigne ($z_0$) dans la direction de mesure (z) concernée en fonction de l'amplitude ($A_{zT}$) déterminée de telle sorte que l'amplitude maximale du signal de mesure du codeur de valeur mesurée dans la direction de mesure concernée à tarer est à présent inférieure à la fourchette de tarage adaptée,
- tarage de la pièce (10) supportant la broche de palpage de telle sorte que les valeurs mesurées ($z_T$) du codeur de mesure destiné à mesurer la déviation de la pièce (10) supportant la broche de palpage dans la direction de mesure concernée (z) ne dépassent pas la fourchette de tarage ($Z_{Amax}$, $Z_{Amin}$) définie autour de la position de consigne ($z_0$).

**17.** Procédé selon la revendication 16, **caractérisé en ce que** l'opération de tarage est interrompue lorsque l'amplitude ($A_{zT}$) des oscillations dépasse une valeur maximale définie.

**18.** Procédé selon la revendication 16 ou 17, **caractérisé en ce que** l'amplitude est déduite des valeurs mesurées ($z_T$) du codeur de valeur mesurée (15) qui mesure la déviation de la pièce (10) supportant la broche de palpage par rapport à la tête de palpage dans la direction de mesure concernée (z).

**19.** Procédé selon la revendication 18, **caractérisé en ce que** l'amplitude est déterminée par détection des valeurs de crête des valeurs mesurées ($z_T$).

**20.** Procédé selon l'une des revendications 16 à 19, **caractérisé en ce qu'**un message d'erreur est délivré en cas d'agrandissement de la fourchette de tarage.

**21.** Procédé selon l'une des revendications 16 à 20, **caractérisé en ce qu'**au moins deux fourchettes de tarage ($Z_{Fmax}$, $Z_{Fmin}$ et $Z_{Amax}$, $Z_{Amin}$) de tailles différentes sont possibles et l'une des fourchettes de tarage est sélectionnée en fonction de l'amplitude déterminée ($A_{zT}$).

**22.** Procédé selon l'une des revendications 16 à 21, **caractérisé en ce qu'**un message d'erreur propre est associé à au moins deux fourchettes de tarage possibles de tailles différentes.

**23.** Procédé selon l'une des revendications 16 à 22, **caractérisé en ce que** des caractéristiques supplémentaires des oscillations sont déterminées en plus de l'amplitude.

**24.** Procédé selon la revendication 23, **caractérisé en ce que** les fréquences des oscillations sont déterminées.

**25.** Procédé selon la revendication 24, **caractérisé en ce que** les fréquences sont déterminées par une analyse de Fourier.

**26.** Procédé selon la revendication 23, **caractérisé en ce que** les oscillations en d'autres endroits de l'appareil de mesure de coordonnées sont mesurées.

**27.** Procédé selon la revendication 26, **caractérisé en ce que** les valeurs mesurées à l'échelle ($z_m$) destinées à mesurer la position de la tête de palpage dans la direction de mesure concernée (z) sont en plus analysée pour y déceler d'éventuelles oscillations.

**28.** Procédé selon l'une des revendications 16 à 27, **caractérisé en ce que** l'écart ($G_F$) entre les limites de la fourchette de tarage ($z_{Amax}$, $z_{Amin}$) est déterminé proportionnellement à l'amplitude mesurée ($A_{zT}$) des oscillations de la tête de palpage dans la direction de mesure concernée.

# FIG.1

# FIG.3

Tarierregler

## FIG.2

## FIG.4

## FIG.5

## FIG.6

## FIG.7

## FIG.8